## Europäisches Patentamt
## European Patent Office
## Office européen des brevets

(19)

(11) Veröffentlichungsnummer: **0 175 959**
**B1**

(12) # EUROPÄISCHE PATENTSCHRIFT

(45) Veröffentlichungstag der Patentschrift:
04.01.89

(51) Int. Cl.⁴: **B 60 N 1/06**

(21) Anmeldenummer: **85111007.2**

(22) Anmeldetag: **31.08.85**

(54) **Kopfstütze für Kraftfahrzeugsitze.**

(30) Priorität: **27.09.84 DE 3435478**

(43) Veröffentlichungstag der Anmeldung:
**02.04.86 Patentblatt 86/14**

(45) Bekanntmachung des Hinweises auf die Patenterteilung:
**04.01.89 Patentblatt 89/1**

(84) Benannte Vertragsstaaten:
**AT FR GB IT SE**

(56) Entgegenhaltungen:
**DE-A-2 525 013**
**DE-A-2 945 060**
**DE-A-3 339 362**
**DE-C-1 945 571**
**FR-A-2 384 644**

(73) Patentinhaber: **Butz, Eugen Otto, Krabbenburg 3,**
**D-4010 Hilden (DE)**

(72) Erfinder: **Butz, Eugen Otto, Krabbenburg 3, D-4010**
**Hilden (DE)**

(74) Vertreter: **Ostriga, Harald, Dipl.- Ing.,**
**Patentanwälte Dipl.- Ing. Harald Ostriga Dipl.-**
**Ing. Bernd Sonnet Stresemannstrasse 6-8, D-5600**
**Wuppertal 2 (DE)**

LIBER, STOCKHOLM 1989

## Beschreibung

Die Erfindung betrifft eine Kopfstütze für Kraftfahrzeugsitze, wie sie entsprechend dem Oberbegriff des Patentanspruchs 1 durch die FR-A-2 384 644 bekanntgeworden ist.

Die FR-A-2 384 644 zeigt einen Polsterträger, welcher neigeverstellbar auf einer Traverse gelagert ist, die endseitig oben und mittig an einer sitzlehnenseitig gehaltenen Tragstange befestigt ist. Beidseitig der Tragstange ragen von der Traverse zwei voneinander distanzierte Rastarme nach oben, deren gleichsinnig quer abgekröpfte Enden in Rastlöcher von Seitenwandteilen des Polsterträgers eingreifen. Falls die Neigeposition des Polsterträgers verändert werden soll, wird er entgegen der Rückstellkraft einer Schraubendruckfeder axial auf der ihn gleitbar tragenden Traverse verschoben. Hierbei rasten die von den abgekröpften Rastarm-Enden gebildeten Rastvorsprünge aus den Rastlöchern aus, so daß eine stufenweise Neigverstellung vorgenommen werden kann. Nach Änderung seiner Neigeposition schiebt die Schraubendruckfeder den Polsterträger axial entlang der Traverse in eine andere relative Rastlage mit dem Rastvorsprung.

Die DE-A-2 525 013 zeigt eine Kopfstütze für Kraftfahrzeugsitze, deren wesentlicher Aufbau dem der vorbeschriebenen Kopfstütze gemäß der FR-A-2 384 644 nahezu gleich ist. Jedoch weist die Kopfstütze gemäß der DE-A-2 525 013 zwei Tragstangen auf.

Die vorbeschriebenen bekannten Kopfstützen werden sowohl hinsichtlich ihres Bauaufwandes als auch hinsichtlich ihrer Bedienungsweise als verbesserungsbedürftig empfunden.

Ausgehend von der eingangs beschriebenen Kopfstütze gemäß der FR-A-2 384 644, liegt der Erfindung die Aufgabe zugrunde, eine leicht bedienbare und feinstufig einstellbare Kopfstütze vereinfachter Bauart zu schaffen. Diese Aufgabe wurde entsprechend dem Kennzeichenteil des Patentanspruchs 1 gelöst.

Jedes federbelastete Rastelement ist einem eigenfedernd-elastischen Wandbereich des Polsterträgers und/oder einem Tragstangenaufsatz angeformt. Beziehungsweise der aus Kunststoff bestehende Tragstangen-Aufsatz weist an seinem oberen der Sitzlehne abgewandten freien Ende einen einstückig angeformten, federnd nachgiebigen Arm auf, dessen Rastvorsprung in Rasten der Polsterträgerwand eingreifbar ist. Diese Maßnahmen bilden zunächst Voraussetzung für eine einfache Bauweise und auch für eine einfache Bedienungsweise ohne lästige Manipulationen, wie etwa eine seitliche Axialverschiebung des Polsterträgers entsprechend dem Stand der Technik. Zudem gestattet die Erfindung im Unterschied zu den eingangs beschriebenen bekannten Kopfstützen eine feinfühlige vielstufige Rastverstellung.

Weiterhin ist bei der erfindungsgemäßen Kopfstütze der Rastarm unter Bildung eines sicheren Hebelarms überlang ausgebildet. Mit der überlangen Ausbildung des Rastarms verbinden sich noch folgende besondere Vorteile: die Federkennlinie (und damit die Neigeverstellkräfte) können durch Form- bzw. Querschnittsgestaltung eines sehr langen Rastarms besser den besonderen Bedingungen eines bestimmten Kopfstützen-Typs angepaßt werden. Insbesondere aber kann das den Rastvorsprung bzw. den Rastnocken tragende freie Ende des überlangen Rastarms bei baulich vorgegebener Tiefe des Polsterträgers und vorgegebenem Schwenkwinkel einen größeren Schwenkweg vollführen, so daß eine relativ große Anzahl deutlich voneinander abgegrenzter Rastausnehmungen (mit dem Vorteil einer vielstufigen Verstellbarkeit) vorgesehen sein kann.

In jedem Falle ist es günstig, die Eingriffsstelle etwa in Höhe oder oberhalb einer durch den Flächenschwerpunkt der Polsterträger-Breitfläche verlaufenden horizontalen Geraden anzuordnen. Dies bedeutet, daß der Eingriff zwischen Rastnocken und polsterkörperseitigen Rasten so positioniert ist, daß die Höhenlinie, an welcher der Kopf des Fahrgastes die Kopfstütze bei ergonomisch korrekter Höheneinstellung normalerweise berührt, in Höhe der Eingriffsstelle oder sogar - was noch besser wäre - zwischen der Eingriffsstelle und dem Schwenklager angeordnet ist. Auf diese Weise wird eine unabsichtliche Verstellung vermieden. Die vorbeschriebene Positionierung des Rasteingriffs bezüglich der erwähnten horizontalen Geraden durch den Flächenschwerpunkt wird aber entsprechend der Erfindung regelmäßig bereits dadurch erreicht, daß der Rasteingriff dem obersten Endbereich des Polsterträgers zugeordnet ist.

In weiterer Ausgestaltung der Erfindung sind die Rasten innenseitig der äußeren Schmalwand des Polsterträgers vorgesehen. Hierbei kann es zweckmäßig sein, daß ein mit eingeprägten Rastvertiefungen versehenes Stahlblechelement am obersten Endbereich des Polsterträgers befestigt, vorzugsweise verrastet, ist.

Ein weiträumiger Verstellweg wird in weiterer Ausgestaltung der Erfindung überdies dadurch erzielt, daß die fächerförmig angeordneten Rasten sich nebeneinander über die gesamte Breite des Schmalbereichs des Polsterträgers hinweg erstrecken.

Fußend auf den bisherigen praktischen Verhältnissen bei einem eine Kunststoffhülse aufweisenden Tragstangen-Aufsatz kann als zweckmäßige Höhenlage für den Rasteingriff auch die Regel benannt werden, wonach bei dem eine Hülse aufweisenden, eine Tragstange umschließenden Tragstangen-Aufsatz die oberseitig der Hülse gemessene axiale Länge des Rastarms mindestens genausolang ist wie die axiale Länge der Hülse.

Insgesamt ermöglicht es die Erfindung, für den Tragstangen-Aufsatz jede geeignete Schwenklagerung, sei es eine Schwenklagerung ohne Selbsthemmung oder mit Selbsthemmung (zum letzteren vgl. die erwähnten Klemmlagerschelle) zu wählen. Diesbezügliche Ausgestaltungen sind zusätzlichen Unteransprüchen zu entnehmen.

Weitere Einzelheiten der Erfindung ergeben sich aus der Zeichnungsbeschreibung im Zusammenhang mit der Zeichnung.

In den Zeichnungen ist ein bevorzugtes Ausführungsbeispiel entsprechend der Erfindung näher dargestellt,

es zeigen

Fig. 1 eine zwecks einfacherer Darstellung nur halb gezeichnete teilweise gechnittene Ansicht einer Kopfstütze (der Polsterkörper ist nicht dargestellt), und zwar in einem vertikalen Teilschnitt durch die Rastanordnung (etwa in natürlicher Größe),

Fig. 2 einen vertikalen Teilschnitt etwa entsprechend der Schnittlinie II- II in Fig. 1,

Fig. 3 eine vergrößerte Querschnittsdarstellung etwa entsprechend der Schnittlinie III - III in Fig. 1,

Fig. 4 einen hälftigen Vertikalschnitt durch einen Polsterträger, etwa wie bei Fig. 1 ohne Polsterträger-Oberteil, jedoch mit einem eingefügten Tragstangenaufsatz, aber ohne Tragstange; dieser Polsterträger ist für eine Montage des Tragstangenaufsatzes in der Montage-Einschubrichtung von der Unterseite des Polsterträgers her geeignet;

Fig. 5 einen Polsterträger in Anlehnung an die Darstellung gemäß Fig. 4, bei welchem jedoch die Montage des Tragstangenaufsatzes von der Polsterträger-Oberseite her erfolgt, und

Fig. 6 in Anlehnung an die Darstellungsweise der Fig. 4 lediglich einen vergrößerten Ausschnitt eines unteren Endbereichs eines rahmenartigen Polsterträgers.

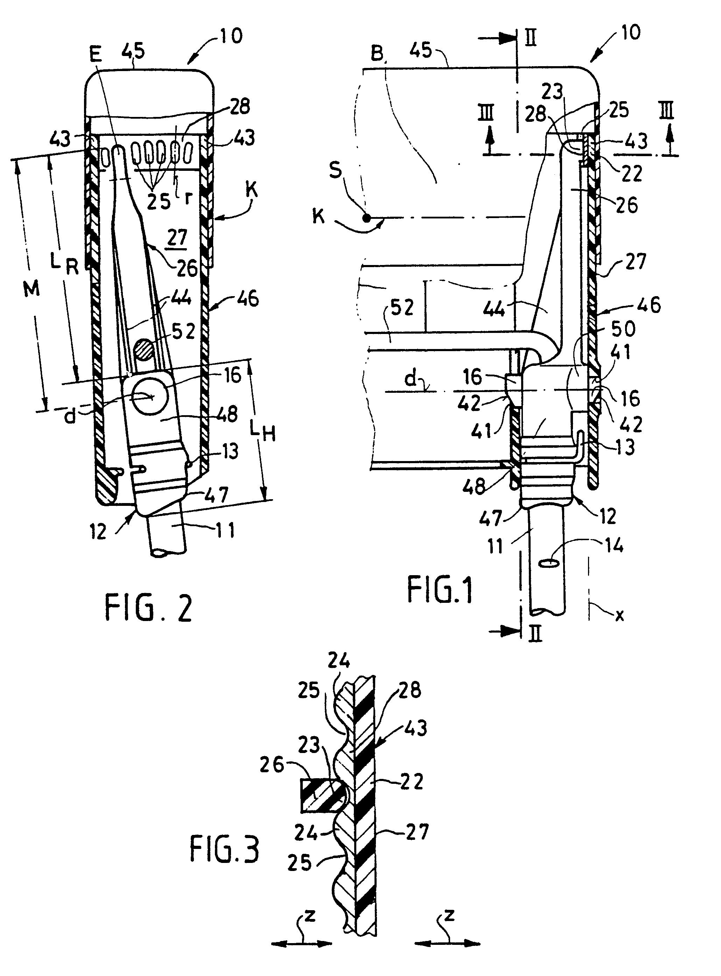

In den Zeichnungen ist ein Polsterträger allgemein mit der Bezugsziffer 10 versehen. Der in Fig. 1 nur hälftig dargestellte Polsterträger 10 ist bei einer fertigen Kopfstütze für Kraftfahrzeugsitze gänzlich von einem nicht dargestellten Kopfpolster umgeben.

An seiner der nicht dargestellten Sitzlehne zugewandten Unterseite treten aus dem Polsterträger 10 Tragstangen 11 aus, von denen in der hälftigen Darstellung gemäß Fig. 1 nur eine Tragstange 11 gezeigt ist. Jede Tragstange 11 ist in einem Tragstangen-Aufsatz 12 gehalten und, da es sich bei bei dem darstellten Ausführungsbeispiel um eine innenverstellbare Kopfstütze handelt, gleitverschieblich und in der Höhe arretierbar geführt. Zur gleitverschieblichen Führung auf der Tragstange 11 weist der Tragstangenaufsatz 12 eine die Tragstange 11 umgreifendes Hülsenteil 47 auf. Zur Höhenarretierung ist das Hülsenteil 47 von einer Arretierfeder 13 teilweise durchgriffen, welche schnappverrastend mit Rastkerben 14 der Tragstange 11 zusammenwirkt. Am oberen, d. h. dem sitzlehnenfernen Ende des Hülsenteils 47, sind beiderseits einander koaxial und quer abstehend im wesentlichen gleichgestaltete Drehzapfen 16 an den Tragstangen-Aufsatz 12 angeformt. Die Drehzapfen 16 bestehen mit dem übrigen hülsenförmigen Tragstangen-Aufsatz 12 aus einem geeigneten Kunststoff.

Beide Drehzapfen 16 sind in polsterträgerseitige Lagerausnehmungen 41 eingeschoben und dort eingerastet, was durch drehzapfenseitige Abfasungen 42 erleichtert wird. Abgesehen von der gezeigten Schwenklagerung des Polsterträgers 10 in seinen Lagerausnehmungen 41 an den Drehzapfen 16, ist auch eine andere zweckmäßige, den Bedürfnissen einer Kopfstütze entsprechende Schwenklagerung denkbar.

Die Eigenart der dargestellten Rastanordnung besteht darin, daß ohnehin vorhandene und aneinander verschwenkbare Bauteile, also Polsterträger 10 und Tragstangen-Aufsatz 12, mit jeweils zwei kooperierenden Rastelementen - also Raste bzw. Rastaussparung und Rastvorsprung - versehen werden. Jeweils mindestens eines der Rastelemente ist hierbei werkstoffbedingt eigenfederndelastisch ausgebildet.

Die Schwenkebene, in welcher sich die Schwenkbewegung zwischen den relativ zueinander verschwenkbaren Körpern 10 und 12 vollzieht, ist jeweils mit einer unterbrochenen Linie und x gekennzeichnet.

Entsprechend den Zeichnungen ist oberseitig des Tragstangenaufsatzes 12 ein sich etwa in der Schwenkebene x erstreckender, im Verhältnis zur eigentlichen Hülse 12 sehr langer Rastarm 26 vorgesehen, welcher an seinem freien Ende einen Rastnocken 23 aufweist. Der eigenfederndelastische Wandbereich 22 kann grundsätzlich von der äußeren Schmalwand 27 des Polsterträgers 10 gebildet sein. Zwar ist es möglich, daß der Polsterträger 10 selbst die Gegenrastelemente, d. h. die Rastausnehmungen oder Rasten bildet, jedoch hat es sich als besonders vorteilhaft herausgestellt, eine Stahleinlage bzw. Federstahleinlage 28 (mit Rasten 25) im obersten Endbereich 43 des Polsterträgers 10 anzuordnen.

Beim dargestellten Ausführungsbeispiel können nicht nur der Wandbereich 22 und/oder die Federstahleinlage 28 sondern auch der Rastarm 26 entlang dem Doppelpfeil z federn bzw. "atmen". Hierbei können die Federraten, d. h. die Federeigenschaften sowohl des Wandbereichs 22, der Federstahleinlage 28, als auch des Federarms 26, von Kopfstützen-Typ zu Kopfstützen-Typ verschieden sein und jeweils individuell bemessen werden.

Wie aus den Fig. 1 und 2 hervorgeht, ist der Rastarm 26 überlang ausgebildet. Es zeigt sich, daß die Länge $L_R$ des Rastarms 26 wesentlich größer ist als die Länge $L_H$ der Hülse 47. Aufgrund dieser Verhältnisse ist gewährleistet, daß die horizontale Gerade K etwa durch den Flächenschwerpunkt S der Breitfläche B des Bauteils 10 geht und sich zwischen dem Rasteingriff 23, 25 (Eingriffsstelle E) und der Schwenkachse d der Lagerzapfen 16 befindet. Auf diese Weise wird eine unbeabsichtigte Neigeverstellung während des Gebrauchs der Kopfstütze vermieden. Als Breitfläche B ist hierbei die etwa oberhalb der Schwenkachse d vorhandene breitseitige Ansichtsfläche des Polsterträgers 10 gemeint.

Zur Ausbildung der Verrastung ist noch zu erwähnen, daß die Federstahleinlage 28 mit ihren deutlich voneinander getrennten Rastausnehmungen 25 sich über die gesamte Breite der äußeren Schmalwand 27 hinwegerstreckt. Durch die gewählte Anordnung ist eine vielstufige Rastverstellung, und - insbesondere bedingt durch den überlangen Hebelarm des Rastnockens 23 - ohne weiteres eine hinreichend große Rastkraft möglich geworden.

Wie aus Fig. 3 im einzelnen zu ersehen, wirkt der Rastvorsprung bzw. Rastnocken 23 mit etlichen jeweils durch einen abgerundeten Kamm 24 voneinander getrennten Rasten bzw. Rastausnehmungen 25 zusammen. Die Rastausnehmungen 25 erstrecken sich mit ihren Längsachsen r fächerförmig und radial zur Schwenkachse d.

Die Überlänge des Rastarms 26 ermöglicht es in besonderer Weise auch, die Federkennlinie des Rastarms je nach den besonderen Anforderungen, die ein bestimmter Kopfstützen-Typ stellt, individuell anzupassen. Dieses kann auch über eine besondere Dicken- bzw. Querschnittsprofilierung über die Länge $L_R$ des Rastarms 26 geschehen. Die Federsteifigkeit des Rastarms 26 wird beim vorliegenden Ausführungsbeispiel dadurch erhöht, daß über die gesamte Länge des Rastarms hinweg eine sich senkrecht zur Schwenkebene x erstreckende Stützrippe 44 vorgesehen ist.

Im übrigen ist beim vorliegenden Ausführungsbeispiel der oberste Endbereich 43 des Polsterträgers 10 dem Hauptkörper 46 und nicht der unter Keilklemmung nach unten verschieblichen Kappe 45 zugeordnet.

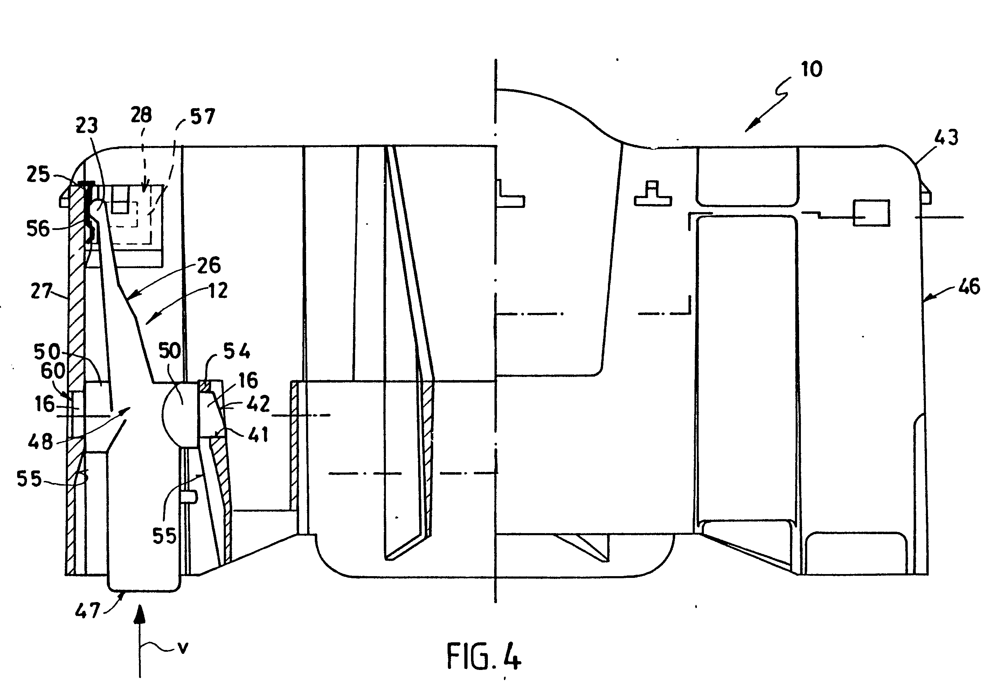

Alle dargestellten Ausführungsformen besitzen den Vorteil, daß bislang übliche Klemmlagerschellen zur Aufnahme der Drehzapfen 16 entfallen können. Dies sei nun im Zusammenhang mit den Fig. 4 - 6 erläutert, die eine vereinfachte Drehzapfen-Anordnung zeigen.

Der Tragstangenaufsatz 12 weist zur Aufnahme der Tragstange 11 das Hülsenteil 47 auf, an welches einenends ein insgesamt mit 48 bezeichneter, etwa querstegartiger Ansatz angeformt ist. Die beiden diametral gegenüberliegend nach außen weisenden Bereiche des Ansatzes 48 bilden kreiszylindrische Lagerschultern 50 und, jeweils an eine Lagerschulter 50 angesetzt, Lager- bzw. Drehzapfen 16. Beide Lagerschultern 50 und die zugehörigen Lagerzapfen 16 sind koaxial zueinander zur Lager- bzw. Schwenkachse d angeordnet.

Je nach Bauart des Polsterträgers 10 ist eine Einschubmontage des Tragstangenaufsatzes 12 entweder von der Unterseite des Polsterträgers oder aber von der Oberseite her des Polsterträgers 10 geboten. Beim Ausführungsbeispiel gemäß Fig. 1 sind die beiden Tragstangen 11 über einen Querbügel 52 fest miteinander verbunden, der aber erst nach Aufschieben jedes Tragstangenaufsatzes 12 über den jeweils oberen geraden Bereich der Tragstange 11 montiert wird. Eine solche zwei Tragstangen 11, einen Querbügel 52 und zwei Tragstangenaufsätze 12 aufweisende Einheit wird daher, mit den nicht gezeigten sitzlehnenseitigen Einsteckenden der Tragstangen 11 voran, von der Polsterträger-Oberseite her in Richtung y in den Polsterträger 10 eingeschoben und in die Rastlagerstellung hineingedrückt.

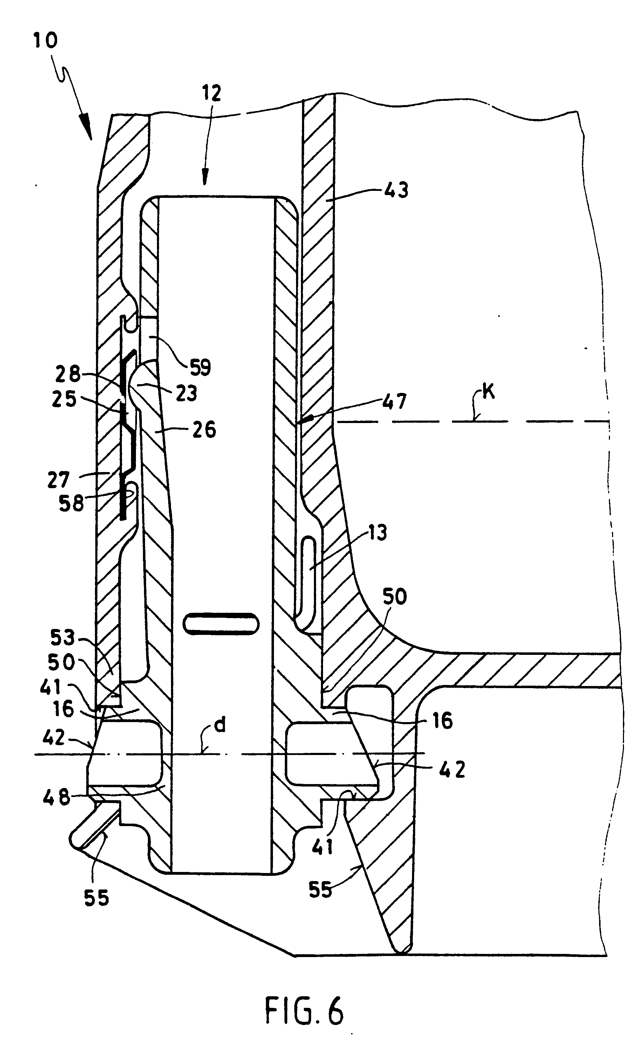

Der rahmenartige Polsterträger 10 gemäß Fig. 6 weist von Haus aus keinen Querbügel 52 auf.

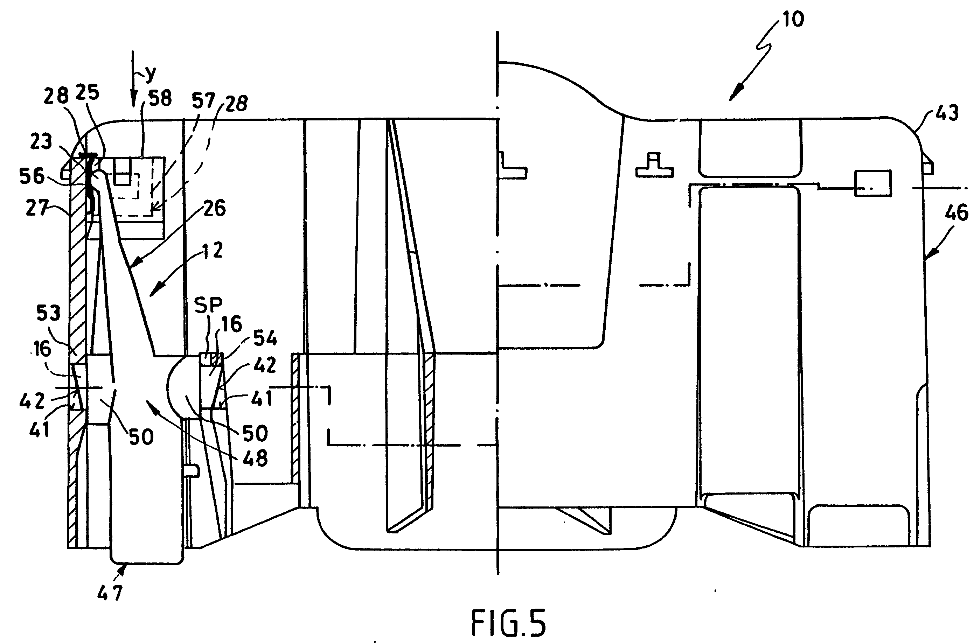

Fig. 5 zeigt ein Polsterträger-Unterteil bzw. einen Hauptkörper 46, der eine Montage der Teile 12 gemeinsam mit den Tragstangen 11 (die Tragstangen 11 sind in Fig. 5 nicht dargestellt) von der Polsterträgeroberseite her in Richtung y gestattet. Beide Lagerzapfen 16 sind mit Auflaufschrägen in Form von stirnseitigen Abfasungen 42 versehen, die jeweils in Montage-Einschubrichtung y spitzkeilförmig zulaufen. In Fig. 5 ist dargestellt, wie die Lagerzapfen 16 bereits in den polsterträgerseitigen kreisrunden Lageröffnungen 41 sitzen. Es ist aber auch vorstellbar, daß die Abfasungen 42 die Polsterträger-Bereiche, und zwar einen Bereich 53 der Polsterträger-Schmalwand 27 und den Bereich 54 einer Polsterträger-Innenwand unter elastisch-rückstellbarer Verformung dieser Bereiche 53, 54 so weit auseinanderdrängen können, bis die Lagerzapfen 16 in die Lageröffnungen 41 hinein einrasten können. Nach diesem Einrastvorgang stellen sich die Wandbereiche 53, 54 sofort zurück und verhindern ein unbeabsichtigtes Herausziehen des Tragstangenaufsatzes 12 entgegen der Richtung y.

Beim Ausführungsbeispiel gemäß Fig. 4 ist vorstellbar, wie die Montage des Tragteils 12 von unten her in der mit v bezeichneten Montage-Einschubrichtung erfolgen kann. Während beim Ausführungsbeispiel gemäß Fig. 5 beide Lagerzapfen 16 mit je einer Abfasung 42 versehen sind, ist beim Ausführungsbeispiel gemäß Fig. 4 nur ein Lagerzapfen 16 mit einer Abfasung 42 ausgerüstet. Um das Einschieben des Tragstangenaufsatzes 12 in Einschub-Montagerichtung v in die in Fig. 4 gezeigte Raststellung hinein zu erleichtern, sind Bereiche des Polsterträger-Unterteils 46 mit Auflaufschrägen bzw. Auflauframpen 55 versehen, welche in Einschub-Montagerichtung v gewissermaßen trichterförmig zulaufen. Beide aus Fig. 4 ersichtlichen Auflaufschrägen 55 (vgl. ebenfalls Fig. 6) bilden somit einen trichterförmigen Montagekanal.

Der Unterschied vom Ausführungsbeispiel gemäß Fig. 4 (Montagerichtung v von unten) und von Fig. 5 (Montagerichtung y von oben) besteht auch darin, daß beim Ausführungsbeispiel gemäß Fig. 4 der polsterträgerseitige Wandungsbereich 54 (der beim Einschieben des Tragstangenaufsatzes 12 nicht verformt wird) dicht an der Lagerschulter 50 anliegen kann, während beim Ausführungsbeispiel gemäß Fig. 5 zwischen dem Bereich 54 und der Lagerschulter 50 ein Spielraum SP vorhanden ist, der das Einschieben des Tragstangenaufsatzes 12 während der Montage in Einschubrichtung y erleichtert.

Das Stahlblechelement bzw. die Federstahleinlage 28 gemäß den Fig. 4 und 5 weist einen Steg 56 auf, in den die Rastausnehmungen 25 eingeprägt sind. Der Steg 56 liegt innenseitig der Polsterträger-Schmalwand 27 an. Der Steg 56 geht beidendig in Halteschenkel 57 über, die in taschenförmigen Ausnehmungen 58 verrastet sind.

Beim Ausführungsbeispiel gemäß Fig. 6 weist das Stahlblechelement 28 keine Halteschenkel 57 auf, sondern erstreckt sich im wesentlichen nur in einer Ebene entlang der Schmalwand 27, ist dort aber innenseitig in taschenförmigen Ausnehmungen 58 gehalten und besitzt darüber hinaus nicht dargestellte Feder-Rastzungen. Die Feder-Rastzungen greifen etwa widerhakenartig in nicht dargestellte Rastausnehmungen ein, die innenseitig an der Polsterträger-Schmalwand 27 vorgesehen sind.

Beim Ausführungsbeispiel gemäß Fig. 6 ist der Rastarm 26 integraler Bestandteil der Kunststoffhülse 47 und so weit oben sowie seitlich freigeschnitten, daß der Rastnocken 23 einen hinreichenden Rasthub ausführen kann. Aus Fig. 6 ist nur der obere Freischnitt 59 ersichtlich, während die beiden seitlichen Freischnitte beidseitig längs des Rastarms 26 nicht dargestellt sind.

Anhand der Zeichnungen ist vorstellbar, daß die dargestellte Neigeverstellung einen einfachen Aufbau aufweist, leicht durch Einschub-Montage zu montieren ist und außerdem trotz Nichtvorhandenseins nachstellbarer Klemmlagerteile eine große Funktionssicherheit bietet. Dadurch, daß der Rastarm 26 jeweils bis in den oberen bzw. obersten Bereich des Polsterträgers 10 hineinragt, also eine Überlänge aufweist, ist ein hinreichend langer Hebelarm M vorgegeben, der eine genügend große Rastkraft zur Arretierung der gewählten Neigungslage gewährleistet und zugleich verhindert, daß eine Neigeverstellung unabsichtlich erfolgt. Eine Neigeverstellung erfolgt nur dann, wenn bewußt eine hinreichende äußere Verstellkraft aufgewandt wird, die groß genug ist, den Rastarm 26 von einer Rastausnehmung 25 in eine andere Rastausnehmung 25 zu verschwenken.

Ergänzend wird noch erwähnt, daß der kreiszylindrisch ausgebildete Lagerzapfen 16 gemäß Fig. 4 eine radial zur Schwenkachse d verlaufende Endstirnfläche 60 besitzt. Alle Lagerzapfen 16 sind hohl ausgebildet.

## Patentansprüche

1. Kopfstütze für Kraftfahrzeugsitze, mit einem von einem Polsterkörper umgebenen Polsterträger (10), welcher an mindestens einer Tragstange (11) mittels eines Neigeverstell-Lagers (16, 41) neigeverstellbar gelagert ist und welcher mittels von ihm und tragstangenseitig gebildeter, relativ zueinander schwenkbarer, in Eingriffsrichtung federbelasteter Rastelemente (23, 25) in stufenweise einstellbaren Neigungspositionen arretierbar ist, wobei die Rastelemente von Rasten (25) und von mindestens einem mit den Rasten (25) verrastbaren endseitig eines Rastarms (26) angeordneten Rastvorsprung (23) gebildet sind, dadurch gekennzeichnet, daß jedes federbelastete Rastelement (23, 25) einem eigenfedernd-elastischen Wandbereich (22) des Polsterträgers (10) und/oder eines Tragstangen-Aufsatzes (12) angeformt ist, wobei der aus Kunststoff bestehende Tragstangenaufsatz (12) an seinem oberen, der Sitzlehne abgewandten freien Ende den Rastarm (26) aufweist, der federnd nachgiebig ausgebildet und dem Tragstangenaufsatz (12) einstückig angeformt ist, wobei der Rastarm (26) unter Verlängerung des Abstandes (M) zwischen der Schwenkachse (d) des Neigeverstell-Lagers (16, 41) und der Eingriffsstelle (E) von Rasten (25) und Rastvorsprung (23) bis in den obersten Endbereich (43) des Polsterträgers (10) hineinragt und wobei der oberste Endbereich (43) des Polsterträgers (10) parallel zu seiner Schmalerstreckung (bei 27) die Rasten (25) bildet.

2. Kopfstütze nach Anspruch 1, dadurch gekennzeichnet, daß die Eingriffsstelle (E) etwa in Höhe oder oberhalb einer durch den Flächenschwerpunkt (S) der Polsterträger-Breitfläche (B) verlaufenden horizontalen Geraden (K) angeordnet ist.

3. Kopfstütze nach Anspruch 1 oder nach Anspruch 2, dadurch gekennzeichnet, daß die Rasten (25) innenseitig der äußeren Schmalwand (27) des Polsterträgers (10) vorgesehen sind.

4. Kopfstütze nach einem der Ansprüche 1 bis 3, dadurch gekennzeichnet, daß ein mit eingeprägten Rastvertiefungen (25) versehenes Stahlblechelement (28) am obersten Endbereich (43) des Polsterträgers (10) befestigt, vorzugsweise verrastet, ist.

5. Kopfstütze nach Anspruch 1 oder nach einem der folgenden Ansprüche, dadurch gekennzeichnet, daß die fächerförmig angeordneten Rasten (25) sich nebeneinander über die gesamte Breite des Schmalbereichs (bei 27) des Polsterträgers (10) hinweg erstrecken.

6. Kopfstütze nach Anspruch 1 oder nach einem der folgenden Ansprüche, dadurch gekennzeichnet, daß bei dem eine Hülse (47) aufweisenden, eine Tragstange (11) umschließenden Tragstangen-Aufsatz (12) die oberseitig der Hülse (47) gemessene axiale Länge ($L_R$) des Rastarms (26) mindestens genau so lang ist wie die axiale Länge ($L_H$) der Hülse (12).

7. Kopfstütze nach Anspruch 1 oder einem der folgenden Ansprüche, dadurch gekennzeichnet, daß zwei diametral zueinander vom Tragstangenaufsatz (12) abstehende Drehzapfen (16) über eine zur Drehzapfen-Schwenkachse (d) geneigt verlaufende und in Montage-Einschubrichtung (y; v) des Tragstangenaufsatzes (12) wirksame Schrägfläche (42; 55) in eine ihm zugeordnete polsterträgerseitige Lageröffnung (41) einschieb- und dort verrastbar ist.

8. Kopfstütze nach Anspruch 7, dadurch gekennzeichnet, daß mindestens ein Drehzapfen (16) je eines Tragstangenaufsatzes (12) als Schrägfläche eine endseitige Abfasung (42) trägt.

9. Kopfstütze nach Anspruch 7 oder nach Anspruch 8, dadurch gekennzeichnet, daß der Polsterträger (10) für mindestens einen Drehzapfen (16) je eine Auflaufschräge (55) bildet.

10. Kopfstütze nach Anspruch 9, dadurch gekennzeichnet, daß je einem eine radial zur Schwenkachse (d) verlaufende Endstirnfläche (60) aufweisenden Drehzapfen (16) eine polsterträgerseitige Auflaufschräge (55) zugeordnet ist.

**Claims**

1. A headrest for motor vehicle seats, comprising an upholstered support (10) surrounded by an upholstered body, said upholstered support (10) being mounted with a tilt adjustment on a crosspiece by means of a tilt adjustment bearing (16, 41), such that it can be locked into stepwise adjustable tilt positions by means of said tilt adjustment bearing (16, 41) and locking members (23, 25) formed on the sides of the support rods, which can be pivoted on to one another and are spring-loaded in the direction of engagement, wherein the locking members are formed by notches (25) and at least one locking projection (23) which locks with the notches (25) and is disposed on the end of a locking arm (26), characterised in that each spring-loaded locking member (23, 25) is formed by a spring elastic wall region (22) of the upholstered support (10) and/or a support rod holder (12), wherein at its upper free end remote from the seat back, the support rod holder (12) consisting of plastic has the locking arm (26) which is designed to be elastically flexible and is formed in one piece by the support rod holder (12), wherein the locking arm (26) projects up to the uppermost end region (43) of the upholstered support (10), increasing the distance (M) between the swivel axis (d) of the tilt adjustment bearing (16, 41) and the engagement point (E) of the notches (25) and locking projection (23), and wherein the uppermost end region (43) of the upholstered support (10) parallel to its narrow section (near 27) forms the notches (25).

2. A headrest according to claim 1, characterised in that the engagement point (E) is disposed approximately level with or above a horizontal straight line (K) passing through the centroid (s) of the broad surface (B) of the upholstered support.

3. A headrest according to claim 1 or according to claim 2, characterised in that the notches (25) are provided on the inner face of the external narrow wall (27) of the upholstered support (10).

4. A headrest according to one of claims 1 to 3, characterised in that a sheet steel member (28) provided with impressed locking identations (25) is secured, preferably locked, to the uppermost end region (43) of the upholstered support (10).

5. A headrest according to claim 1 or according to one of the following claims, characterised in that the notches (25) disposed in a fan-shaped manner extend alongside one another over the entire breadth of the narrow region (near 27) of the upholstered support (10).

6. A headrest according to claim 1 or according to one of the following claims, characterised in that in the case of a support rod holder (12) comprising a sleeve (47) and surrounding a support rod (11), the measured axial length ($L_R$) of the locking arm (26) at the upper side of the sleeve (47) is at least as long as the axial length ($L_H$) of the sleeve (12).

7. A headrest according to claim 1 or one of the following claims, characterised in that two diametrically opposite pivot pins (16) at a distance from the support rod holder (12) can be inserted in to an associated bearing opening (41) on the side of the upholstered support via a sloping surface (42; 55) inclined towards the swivel axis (d) of the pivot pin and operating in the direction of insertion (y; v) of the support rod holder (12), and can be locked in position there.

8. A headrest according to claim 7, characterised in that at least one pivot pin (16) of each support rod holder (12) bears a chamfer (42) at the end as a sloping surface.

9. A headrest according to claim 7 or according to claim 8, characterised in that the upholstered support (10) forms a slope (55) for at least one pivot pin (16).

10. A headrest according to claim 9, characterised in that each pivot pin (16) having an end face (60) radial to the swivel axis (d) is associated with a slope (55) on the side of the upholstered support.

**Revendications**

1. Appuie-tête pour sièges de véhicules automobiles, comprenant un support (10) de coussin entouré d'un corps de coussin, qui est monté réglable en inclinaison sur au moins une tige porteuse (11), au moyen d'un palier (16, 41) de réglage de l'inclinaison, et qui peut être verrouillé au moyen d'éléments (23, 25) de verrouillage formés par lui-même et par des éléments solidaires des tiges porteuses, qui peuvent pivoter les uns par rapport aux autres et sont chargés élastiquement dans le sens de la venue en prise dans des positions d'inclinaison réglables par paliers, les éléments de verrouillage étant formés par des crans (25) et par au moins une saillie (23) de verrouillage qui est prévue à une extrémité d'un bras (26) de verrouillage qui peut se verrouiller dans les crans (25),

caractérisé par le fait que chaque élément (23, 25) de verrouillage, chargé élastiquement, est formé sur une région de paroi (22) du support (10) de coussin qui est élastique de par son élasticité propre, et/ou sur un embout (12) de tige porteuse, l'embout (12) de tige porteuse en matière plastique présentant, à son extrémité libre supérieure la plus éloignée du dossier, le bras (26) de verrouillage qui est de configuration capable de fléchir élastiquement et est formé d'une seule pièce avec l'embout (12) de tige porteuse, le bras (26) de verrouillage étant engagé, avec prolongement de la distance (M) entre l'axe (d) de pivotement du palier (16, 41) de réglage de l'inclinaison de la zone (E) de venue en prise entre les crans (25) et la saillie (23) de verrouillage, jusque dans la région terminale extrême supérieure (43) du support (10) de coussin, la région terminale extrême supérieure (43) du support (10) de coussin formant les crans (25) dans une direction parallèle à sa dimension étroite en (27).

2. Appuie-tête selon la revendication 1,
caractérisé par le fait que la zone (E) de venue en prise est disposée à peu près au niveau, ou au-dessus, d'une droite horizontale (K) qui passe par le centre de gravité (S) de la surface de la face large (B) du support de coussin.

3. Appuie-tête selon la revendication 1 ou la revendication 2,
caractérisé par le fait que les crans (25) sont prévus sur la face intérieure de la paroi étroite extérieure (27) du support (10) de coussin.

4. Appuie-tête selon une des revendications 1 à 3,
caractérisé par le fait qu'un élément (28) en tôle d'acier, muni de crans de verrouillage (25) emboutis, est fixé, de préférence par encliquetage, dans la région terminale extrême supérieure (43) du support (10) de coussin.

5. Appuie-tête selon la revendication 1 ou des revendications suivantes,
caractérisé par le fait que les crans (25), disposés en éventail, s'étendent les uns à côté des autres sur toute la largeur de la région étroite, en (27), du support (10) de coussin.

6. Appuie-tête selon la revendication 1 ou l'une des revendications suivantes,
caractérisé par le fait que, sur l'embout (12) de tige porteuse, qui présente un manchon (47) et qui entoure une tige porteuse (11), la longueur axiale ($L_R$) du bras (26) de verrouillage, mesurée au-dessus du manchon (47), est au moins aussi longue que la longueur axiale ($L_H$) du manchon (12).

7. Appuie-tête selon la revendication 1 ou l'une des revendications suivantes,
caractérisé par le fait que deux tourillons (16), qui font saillie diamètralement l'un par rapport à l'autre sur l'embout (12) de tige porteuse, peuvent être emmanchés et verrouillés dans une ouverture de palier (41) solidaire du support de coussin et qui leur correspond, par l'intermédiaire d'une surface oblique (42, 55) qui s'étend dans une direction inclinée par rapport à l'axe de pivotement (d) des tourillons, et qui agit dans le sens de l'emmanchement du montage (y, v) du capuchon (12) de la tige porteuse.

8. Appuie-tête selon la revendication 7,
caractérisé par le fait qu'au moins un tourillon (16) de chaque embout de tige porteuse (12) porte, en qualité de surface oblique, un chanfrein (42) formé en bout.

9. Appuie-tête selon la revendication 7 ou selon la revendication 8,
caractérisé par le fait que le support (10) de coussin forme un chanfrein d'entrée (55) pour un tourillon (16) au moins.

10. Appuie-tête selon la revendication 9,
caractérisé par le fait qu'à chaque tourillon (16), qui présente une surface frontale terminale (60) qui s'étend radialement à l'axe de pivotement (d), est associée une surface inclinée (55) portée par le support de coussin.

FIG. 2

FIG.1

FIG.3

FIG. 4

EP 0 175 959 B1

FIG.5

FIG.6